# EUROPÄISCHE PATENTSCHRIFT

(11) **EP 2 005 098 B1**
(45) Veröffentlichungstag und Bekanntmachung des Hinweises auf die Patenterteilung: **02.09.2009**
(21) Anmeldenummer: 07727997.4
(22) Anmeldetag: 11.04.2007
(51) Int. Cl.: F27D 3/00, C04B 7/43

(54) **VERFAHREN UND VORRICHTUNG ZUM EINFÜHREN VON ROHMEHL UND FESTBRENNSTOFF IN EINEN KALZINATOR**
METHOD AND DEVICE FOR INTRODUCING RAW MEAL AND SOLID FUEL INTO A CALCINER
PROCÉDÉ ET DISPOSITIF D'INTRODUCTION D'AGRÉGAT BRUT ET DE COMBUSTIBLE SOLIDE DANS UN CALCINATEUR

(30) Priorität: 12.04.2006 DE 102006017210
(43) Veröffentlichungstag der Anmeldung: 24.12.2008
(73) Patentinhaber: Cemag Anlagenbau Dessau GmbH, 06846 Dessau (DE)
(72) Erfinder: KROHN, Reiner, 06844 Dessau (DE)
(74) Vertreter: Gritschneder, Martin
(86) Internationale Anmeldenummer: PCT/EP2007/053529
(87) Internationale Veröffentlichungsnummer: WO 2007/116084

(56) Entgegenhaltungen:
- EP-A- 1 310 467
- DE-A1- 3 346 536
- GB-A- 2 142 126

## Beschreibung

### Technisches Gebiet

Die Erfindung betrifft ein Verfahren und eine Vorrichtung zum Einführen von Rohmehl in den Kalzinator einer Anlage zur Herstellung von Zementklinker, wobei das Rohmehl mittels eines Gasstroms pneumatisch in den Kalzinator gefördert wird.

Zementklinker wird in einem thermischen Prozess aus Rohmehl hergestellt. Dieser Prozess findet beim Einsatz des Trockenverfahrens in einer Anlage statt, in welcher das Rohmehl in einem Zyklonvorwärmer erwärmt und restgetrocknet, in einem Kalzinator kalziniert, in einem Drehofen zu Klinker umgewandelt und dann in einem Klinkerkühler gekühlt wird. Im Allgemeinen weist eine solche Drehofenanlage ferner einen Kalzinator auf und werden die Abgase des Drehofens und ein Teil der Heißluft aus dem Rostklinkerkühler als Tertiärluft dem Kalzinator zugeführt. Die Energiezuführung für, die Stoffumwandlung in dieser Anlage erfolgt durch Brennstoffzuführung in den Kalzinator und in den Drehofen. Das Rohmehl wird dem Kalzinator über einen Rohmehlaufgabekasten aufgegeben, der eine Rohmehlrutsche und einen Prallschieber aufweist.

Für einen gleichmäßigen Ablauf der Verbrennungsreaktion und der dazu parallel verlaufenden Rohmehlkalzinierung ist eine gleichmäßige Verteilung des Brennstoffes und des Rohmehls über den gesamten Kalzinatorquerschnitt erforderlich.

### Stand der Technik

Aus EP-A-1 310 467 ist es bekannt, zur Bildung einer gleichmäßig verteilten Gas-Rohmehl-Festbrennstoff-Suspension Kohlenstaub als festen Brennstoff in den Rohmehlaufgabekasten einzuleiten, dort mit dem vorerhitzten Rohmehl zu vermischen und danach über den Prallschieber bzw. der Dispersionsplatte in die Reaktionsstrecke des Kalzinators einzuführen. Der Brennstoffeinführungsstutzen ist oben oder seitlich am Mehlaufgabekasten angesetzt. Dadurch wird ein hoher Verschleiß des Prallschiebers bzw. der dem Einführungsstutzen der Förderrohrleitung gegenüberliegenden Seitenwand des Mehlaufgabekastens verursacht. Um diesen Verschleiß zu minimieren, wird die Fördergeschwindigkeit des festen Brennstoffes durch bestimmte Veränderungen an der Förderrohrleitung verringert.

Aus DE-A-196 41 207 ist es bekannt, bei einer gegabelten Tertiärluftleitung einem Zweig der Tertiärluftleitung das Rohmehl aufzugeben.

Aus DE-A-10 2004 009 689 ist ein thermischer Zersetzungsreaktor bekannt, der mit Hilfe von zugeführter Tertiärluft aus festen Brennstoffen Brenngase erzeugt, die dann im Kalzinator eingesetzt werden. Zur Manipulation der Temperatur und zum Schutz der im Zersetzungsreaktor eingesetzten Förderer kann dem Zersetzungsreaktor Rohmehl aus dem Zyklonvorwärmer aufgegeben werden.

### Darstellung der Erfindung

### Technische Aufgabe

Der Erfindung liegt die Aufgabe zu Grunde, die Brennstoff- und Mehlverteilung über den gesamten Kalzinatorquerschnitt zu verbessern, ohne dass ein übermäßiger Verschleiß des Rohmehlaufgabekastens auftritt.

### Technische Lösung

Erfindungsgemäß wird diese Aufgabe bei einem Verfahren gemäss Anspruch 1 dadurch gelöst, dass der Festbrennstoff/Rohmehl/ Förderluftstrom etwa waagrecht in den Kalzinator eingeleitet wird.

Der Festbrennstoff/Rohmeht/Förderluftstrom wird vorzugsweise mit möglichst geringem Strömungswiderstand in den Kalzinator eingeleitet. Die Förderluft für den Kohlenstaub strömt z.B. mit 20 bis 30 m/s.

Bei dem erfindungsgemäßen Verfahren wird die Förderluft des Brennstoffs als der Gasstrom eingesetzt, der das Rohmehl in den Kalzinator fördert. Der staubförmige und flugfähige Brennstoff wird also pneumatisch in den Kalzinator gefördert. Der Rohmehlaufgabekasten hat eine Dispersionsplatte.

Um das Rohmehl zur Erzielung einer gleichmäßigen Gutverteilung zu beschleunigen, ist die Brennstoff-Förderrohrleitung waagerecht bis leicht schräg an dem Rohmehlaufgabekasten angeordnet. Durch die pneumatische Brennstoffaufgabe von hinten in den Rohmehlaufgabekasten parallel zu den Seitenwänden und zum Prallschieber entsteht kaum Verschleiß und wird das Rohmehl nahezu optimal durch die Förderluft des Brennstoffes zusammen mit dem Brennstoff über den Katzinatorquerschnitt verteilt. Eine Reduzierung der Fördergeschwindigkeit des Brennstoffes ist nicht notwendig.

Die kinetische Energie der Förderluft des festen Brennstoffs wird zur Aufgabe des Rohmehls in den Kalzinator genutzt.

Gegenstand der Erfindung sind ferner Vorrichtungen zur Durchführung der Ausführungsform des erfindungsgemäßen Verfahrens.

### Beschreibung der Zeichnungen

Ein Ausführungsbeispiel der Erfindung wird nachfolgend anhand der Zeichnung näher erläutert. Es zeigt:

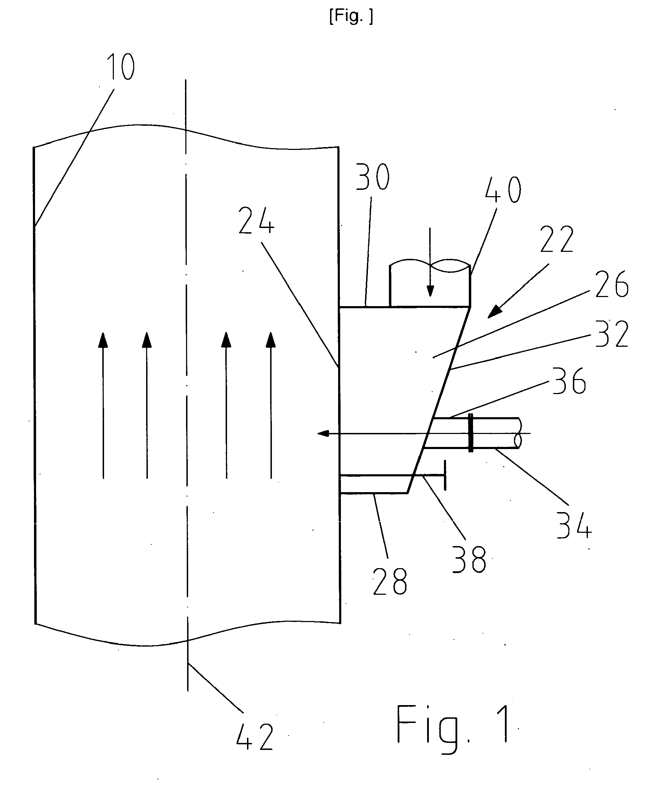

Fig. 1 die Einrichtungen zur Einführung des Rohmehls mittels der Förderluft des festen Brennstoffs.

### Weg(e) zur Ausführung der Erfindung

Die Figur 1 zeigt einen vertikalen Abschnitt eines Kalzinators 10 einer Zementklinkerproduktionsanlage. Das im Rohmehtvorwärmer vorerhitzte und in der vorletzten Zyklonstufe ausgeschiedene Rohmehl wird dann zur Vorkalzinierung in den Kalzinator 10 eingeführt. Aus dem Kalzinator 10 wird das Abgas bestehend aus Drehofenabgas, Verbrennungsgas der Kalzinatorfeuerung und CO₂ aus dem Kalziniervorgang, zur untersten Zyklonstufe des Rohmehlvorwärmers geführt.

Bei dem Ausführungsbeispiel von Fig. 1 wird das Rohmehl mittels eines Mehlaufgabekastens 22 in den Kalzinator 10 eingeführt. Der Mehlaufgabekasten 22 ist außen an einer Öffnung 24 des Kalzinators 10 montiert. Der Mehlaufgabekasten 22 hat zwei Seitenwände 26, eine Unterseite 28 und eine Oberseite 30 sowie eine Rückseite 32. Die Rückseite 32 ist von oben nach unten zur Kalzinatorwand hin schräg gestellt und bildet eine Mehlrutsche. An der Rückseite 32 mündet die Kohlenstaub-Förderrohrleitung 34 in einen Anschlussstutzen 36. Die Kohlenstaub-Förderrohrleitung 34 zielt auf die senkrechte Kalzinatorachse 42. Auf der Unterseite 28 ist noch ein verstellbarer Prallschieber 38 angeordnet. Durch eine Öffnung in der Oberseite 30 des Mehlaufgabekastens 22 wird über ein Fallrohr 40 das vorerhitzte Rohmehl so zugeführt, dass es auf die Mehlrutsche fällt. Es rutscht dort ab, wird vom Kohlenstaub-Förderstrom erfasst und von diesem mit hoher Geschwindigkeit durch die Öffnung 24 in den Kalzinator 10 getragen. Ein Teil des Rohmehls fällt auf den Prallschieber 38 und wird von diesem verteilt.

Der Kohlenstaub-Förderstrom wird in der Förderrohrleitung 34 und dem Mehlaufgabekasten 22 so geführt, dass er einen möglichst geringen Strömungswiderstand erwährt und seine Geschwindigkeit nicht reduziert wird. Insbesondere wird eine Umlenkung oder ein Aufprall des Kohlenstaub-Förderstroms auf die Innenseite des Mehlaufgabekastens 22 vermieden. Der Kohlenstaub-Förderstrom wird daher möglichst geradlinig und mittig durch den Mehlaufgabekasten 22 geführt, um das Rohmehl mitzureißen und gut über dem Kalzinatorquerschnitt zu verteilen.

### Bezugszeichenliste

- 10: Kalzinator
- 12: Tertiärluftleitung
- 14: Rohrstutzen
- 16: Fallrohr
- 18: Rohmehlaufgabekasten
- 22: Mehlaufgabekasten
- 24: Öffnung
- 26: Seitenwände
- 28: Unterseite
- 30: Oberseite
- 32: Mehlrutsche bzw. Rückwand des Mehlaufgabekastens
- 34: Kohlenstaub-Förderrohrleitung
- 36: Förderrohrleitungs-Anschlussstutzen
- 38: Prallschieber bzw. Dispersionsplatten
- 40: Fallrohr für Rohmehl
- 42: Mittelachse des Kalzinators

## Patentansprüche

1. Verfahren zum Einführen von Rohmehl in den Kalzinator (10) einer Anlage zur Herstellung von Zementklinker, wobei Fest-Brennstoff pneumatisch mittels eines Förderluftstroms (34) über einen Rohmehlaufgabekasten (22) in den Kalzinator (10) gefördert wird und das Rohmehl mittels des Förderluftstroms (34) des Brennstoffs pneumatisch in den Kalzinator (10) gefördert wird, **dadurch gekennzeichnet,**
**dass** der Förderluftstrom (34) etwa waagrecht in den Kalzinator (10) eingeleitet wird,
**dass** der Förderluftstrom (34) parallel zu den Seitenwänden (26) des Rohmehlaufgabekastens (22) geführt wird und
**dass** der Förderluftstrom (34) mittig durch den Rohmehlaufgabekasten (22) geführt wird.

2. Verfahren nach Anspruch 1, wobei der Gasstrom mit möglichst geringem Strömungswiderstand in den Kalzinator (10) geleitet wird.

3. Vorrichtung zur Durchführung des Verfahrens nach Anspruch 1, mit einem Mehlaufgabekasten (22), der eine Mehlrutsche (32) aufweist, wobei die Brennstoff-Förderleitung (34) etwa waagerecht von hinten in die Mehlrutsche (32) mündet.

## Claims

1. Process for introducing raw meal into the calciner (10) of an installation for preparing cement clinker, wherein solid fuel is delivered pneumatically into the calciner (10) by means of a delivery-air stream (34) via a raw-meal feed box (22) and the raw meal is delivered pneumatically into the calciner (10) by means of the delivery-air stream (34) of the fuel, **characterized**
**in that** the delivery-air stream (34) is introduced approximately horizontally into the calciner (10),
**in that** the delivery-air stream (34) is guided parallel to the side walls (26) of the raw-meal feed box (22) and
**in that** the delivery-air stream (34) is guided centrally through the raw-meal feed box (22).

2. Process according to claim 1, wherein the gas stream is introduced into the calciner (10) with the smallest possible flow resistance.

3. Device for carrying out the process according to claim 1, with a meal feed box (22) which has a meal chute (32), wherein the fuel-delivery pipe (34) opens out into the meal chute (32) approximately horizontally from behind.

## Revendications

1. Procédé d'introduction de farine crue dans le calcinateur (10) d'une installation en vue de la fabrication de clinker de ciment, le combustible solide étant acheminé par voie pneumatique dans le calcinateur (10) à l'aide d'un courant d'air de transport (34) par l'intermédiaire d'un caisson d'admission de farine crue (22) et la farine crue étant acheminée par voie pneumatique dans le calcinateur (10) à l'aide du courant d'air de transport (34) du combustible, **caractérisé**
**en ce que** le courant d'air de transport (34) est introduit approximativement d'une manière horizontale dans le calcinateur (10),
**en ce que** le courant d'air de transport (34) est conduit d'une manière parallèle aux parois latérales (26) du caisson d'admission de farine crue (22) et
**en ce que** le courant d'air de transport (34) est conduit d'une manière centrale à travers le caisson d'admission de farine crue (22).

2. Procédé selon la revendication 1, le courant de gaz étant conduit dans le calcinateur (10) avec le moins possible de résistance à l'écoulement.

3. Dispositif en vue de l'exécution du procédé selon la revendication 1, avec un caisson d'admission de farine (22), qui présente une glissoire de farine (32), le conduit de transport du combustible (34) débouchant approximativement d'une manière horizontale de l'arrière dans la glissoire de farine (32).
